Europäisches Patentamt

European Patent Office

Office européen des brevets

(19)

(11) Veröffentlichungsnummer: **0 126 383**
**B1**

(12) **EUROPÄISCHE PATENTSCHRIFT**

(45) Veröffentlichungstag der Patentschrift: **16.08.90**

(51) Int. Cl.⁵: **G 01 N 29/10**

(21) Anmeldenummer: **84105257.4**

(22) Anmeldetag: **09.05.84**

(54) **Verfahren zur Ultraschallprüfung von auf Wellen aufgeschrumpften Scheibenkörpern im Bereich der Schrumpfsitze und Einrichtung zur Durchführung des Verfahrens.**

(30) Priorität: **24.05.83 DE 3318748**

(43) Veröffentlichungstag der Anmeldung:
**28.11.84 Patentblatt 84/48**

(45) Bekanntmachung des Hinweises auf die
Patenterteilung:
**16.08.90 Patentblatt 90/33**

(84) Benannte Vertragsstaaten:
**CH DE FR GB LI NL SE**

(56) Entgegenhaltungen:
**EP-A-0 068 521**
**FR-A-2 404 851**
**US-A-4 140 954**

**PATENT ABSTRACTS OF JAPAN, Band 7, Nr. 42
(P-177)1187r, 19. Februar 1983 & JP-A-57-194
349**

(73) Patentinhaber: **Siemens Aktiengesellschaft
Wittelsbacherplatz 2
D-8000 München 2 (DE)**

(72) Erfinder: **Jestrich, Hans-Achim, Dipl.-Ing.
An der Hoffnung 36
D-4030 Ratingen 5 (DE)**
Erfinder: **Werntgen, Ewald
Lehnerstrasse 31
D-4330 Mülheim/Ruhr (DE)**

**Beschreibung**

Die Erfindung bezieht sich auf ein Verfahren zur Ultraschallprüfung von auf Wellen aufgeschrumpften Scheibenkörpern im Bereich der Schrumpfsitze und der angrenzenden Materialbereiche, insbesondere im Bereich der Nabeninnenoberflächen und der axialen Verdrehsicherungen bei Radscheiben von Niederdruck-Turbinen-Läufern, wobei die Radscheiben im Querschnitt gesehen von ihrer Nabenpartie in radialer Richtung von innen nach außen sich etwa keulenförmig bis zu einem Radkranz verjüngende Seitenwangen aufweisen.

Die Geometrie solcher Radscheiben ist für eine Ultraschallprüfung mit Ultraschallprüfköpfen (im folgenden abgekürzt als US-Prüfung und US-Prüfköpfe bezeichnet) der nicht zugänglichen Nabeninnenoberfläche und der axialen Verdrehsicherungen, insbesondere der axialen Verdrehsicherungsbohrungen, äußerst kompliziert. Das Auffinden von axial-radial orientierten Fehlerstellen (Spannungskorrosionsrissen) an der Nabeninnenoberfläche und den axialen Verdrehsicherungen mittels einer US-Prüfung der Radscheiben im aufgeschrumpften Zustand ist jedoch von großer Bedeutung. Die Durchführung reproduzierbarer US-Prüfungen stößt außer dem aufgezeigten Problem der komplizierten Radscheibengeometrie noch auf weitere Probleme: Als Ankopplungsflächen für die US-Prüfköpfe stehen nur die Seitenwangen der Radscheiben zur Verfügung. In den meisten Fällen ist der Abstand zwischen den Radkränzen benachbarter Radscheiben sehr eng, so zwischen der ersten und der zweiten Radscheibe eines Niedruck-Turbinenläufers maximal 50 mm breit. Durch diesen schmalen Spalt müssen die US-Prüfköpfe hindurchgeführt und an den Radscheibenwangen angekoppelt werden. Ein weiteres Problem besteht darin, daß die Schallwege zu den axialen Verdrehsicherungen und zu evtl. vorhandenen, von ihnen ausgehenden Rissen identisch sind.

Ultraschallprüfungen von Teilen mit spezieller Geometrie sind jedoch bekkant; siehe z.B. EP—A—0 068 521.

Der Erfindung liegt die Aufgabe zugrunde, ein Verfahren zur US-Prüfung der eingangs definierten Art zu schaffen, mit welchem die aufgezeigten Probleme gelöst und die gestellten Prüfanforderungen erfüllt werden können, d. h., mit dem

etwaige Spannungskorrosionsrisse (axial-radial orientierte Fehlerstellen) im Bereich der Nabeninnenoberfläche und der axialen Verdrehsicherungen bei auf Wellen aufgeschrumpften Radscheiben nach Lage und Größe auf reproduzierbare Weise mittels US-Prüfung erkannt werden konnen;

100 % der Nabeninnenoberfläche und der axialen Verdrehsicherungen insbesondere der axialen Verdrehsicherungsbohrungen, auf axial-radial orientierte Fehlerstellen untersucht werden können;

axial-radial orientierte Risse mit einer radialen Tiefe von $5 \geq 5$ mm sicher erkannt werden können;

die US-Prüfung sowohl beim Herstellen der Scheibenläufer, insbesondere Turbinenläufer, als auch im Kraftwerk selbst durchgeführt werden kann.

Aufgabe der Erfindung ist es auch, eine vorteilhafte Einrichtung zur Durchführung eines Verfahrens zur US-Prüfung der eingangs genannten Art anzugeben.

Erfindungsgemäß wird der gestellte Aufgabenkomplex verfahrensmäßig durch die im Kennzeichen des Anspruches 1 angegebenen Merkmale in der Hauptsache gelöst. Vorteilhafte Weiterbildungen dieses Verfahrens sind in den Unteransprüchen 2 bis 10 angegeben.

Die Einrichtung zur Durchführung des Verfahrens nach einem der Ansprüche 1 bis 10 ist in der Hauptsache durch die Merkmale des Anspruches 11 gekennzeichnet, wobei Weiterbildungen in den Ansprüchen 12 bis 16 angegeben sind.

Die mit der Erfindung erzielbaren Vorteile sind vor allem darin zu sehen, daß nun auch bei einer sehr komplizierten Prüfgeometrie, die bei auf Wellen aufgeschrumpften Radscheiben gegeben ist, eine zuverlässige US-Prüfung der gesamten Schrumpfsitzlänge ermöglicht ist. Wie es Versuche an einer aufgeschrumpften Test-Radscheibe, die mit zahlreichen Testfehlern versehen war, gezeigt haben, ist mit dem neuen Verfahren der Nachweis der Auffindbarkeit von axial-radial orientierten Fehlerstellen an der Nabeninnenoberfläche und an den axialen Verdrehsicherungsbohrungen von Niederdruck-Radscheiben bei der US-Prüfung der Radscheiben im aufgeschrumpften Zustand erbracht.

Im folgenden werden anhand der Zeichnung, in der ein Ausführungsbeispiel der Erfindung dargestellt ist, das Verfahren nach der Erfindung und seine Durchführungs-Einrichtung noch näher erläutert. Darin zeigt in vereinfachter, schematischer Darstellung:

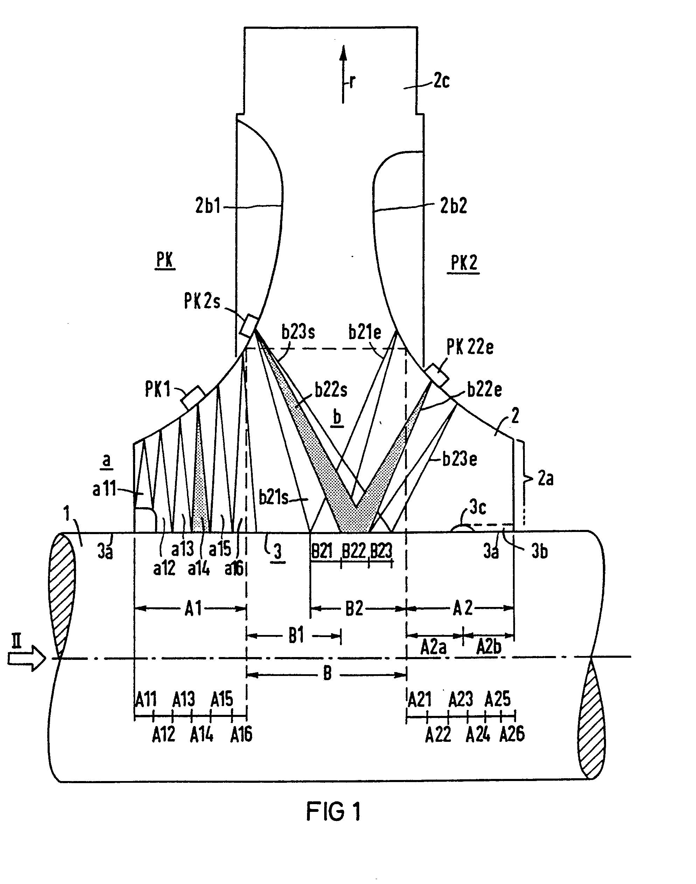

Fig. 1 in einem Axialschnitt (ohne Schnittflächenschraffur) die obere Hälfte der Radscheibe eines Niederdruck-Turbinenläufers, wobei in einem äußeren Prüfbereich A1 ein US-Winkelprüfkopf und 6 US-Strahlenbündel dargestellt sind und zur Beschallung eines mittleren Prüfbereiches B zwei nach dem Prinzip der Tandem-Technik arbeitende US-Winkelprüfköpfe auf die beiden Seitenwangen der Radscheibe aufgesetzt und beispielhaft drei US-Strahlenbündel dargestellt sind;

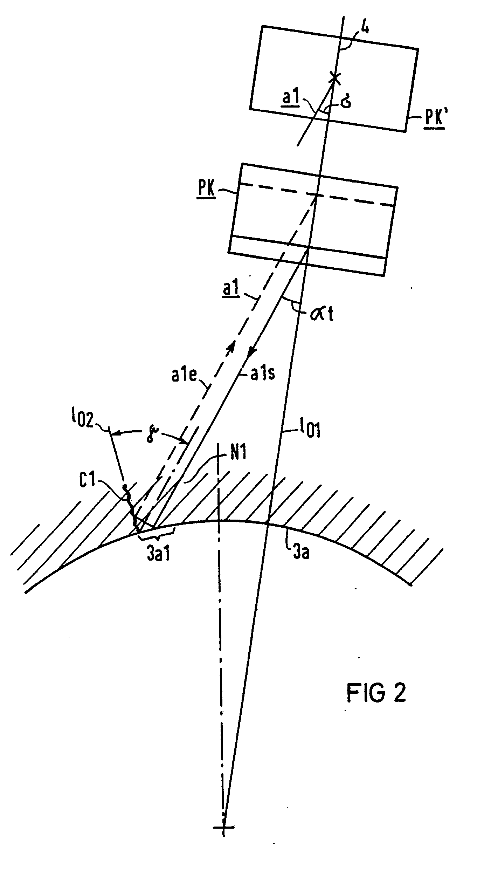

Fig. 2 das Prinzip der Kantenreflexion von Transversalwellen im Auftreffwinkelbereich der Totalreflexion, wie es erfindungsgemäß bei Vorliegen eines axial-radial orientierten Fehlers im Bereich der Nabeninnenoberfläche ausgenutzt wird;

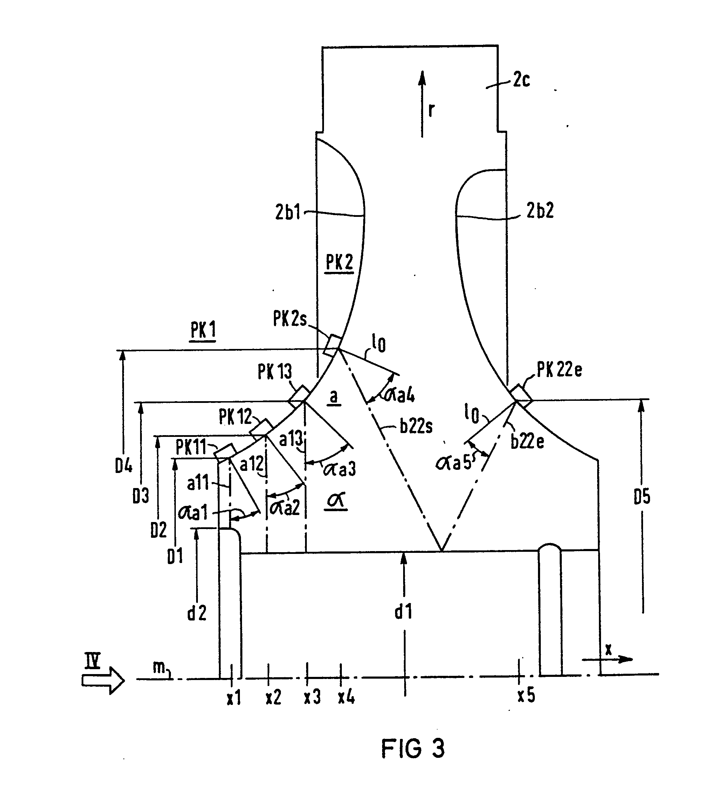

Fig. 3 die Radscheibe nach Fig. 1 in entsprechender Darstellung, wobei hier besonderer Wert auf die Darstellung der axialen Einschallwinkel bei drei zur "Beleuchtung" eines äußeren Prüfbereiches auf die eine Seitenwange aufgesetzten, nach dem Prinzip der Impuls-Echo-Technik arbeitenden US-Winkelprüfköpfen und bei zwei einen mittleren Prüfbereich "beleuchtenden", nach dem Prinzip der Tandem-Technik arbeitenden auf je eine Seitenwange aufgesetzten US-Winkelprüfköpfen gelegt ist;

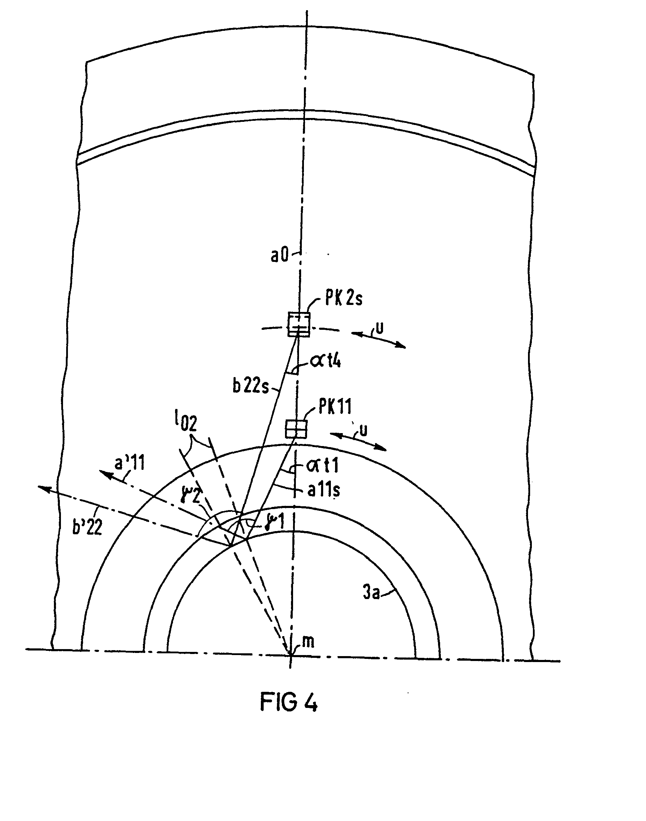

Fig. 4 die Seitenansicht zu Fig. 3, woraus bei zwei in Fig. 3 abgebildeten Prüfköpfen die tangentialen Einschallwinkel $\alpha t_1$, $\alpha t_2$ zur Erzielung der erforderlichen Auftreffwinkel $\gamma 1$, $\gamma 2$ erkennbar sind.

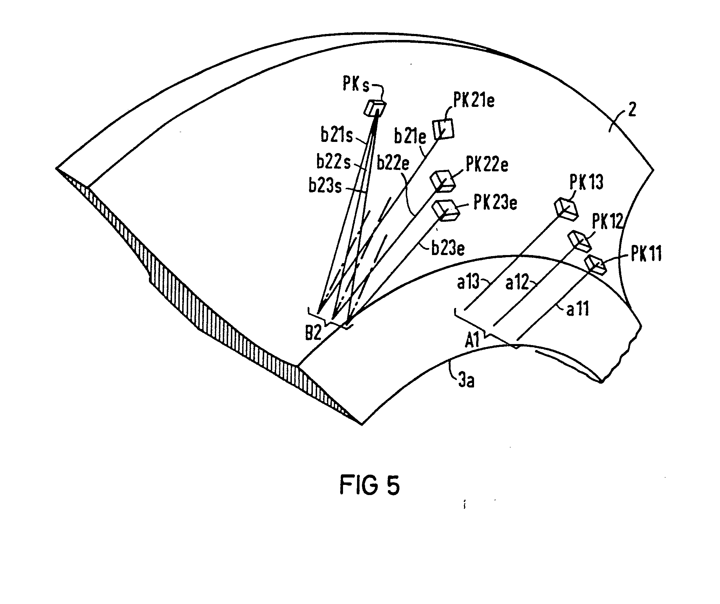

Fig. 5 perspektivisch anhand eines durchsichtigen Radscheibensegment-Modells die Reflexionsverhältnisse bei entsprechenden Fehlern für die grundsätzliche Prüfanordnung nach Fig. 3 und 4, wobei zusätzlich bei den nach dem Tandem-Prinzip arbeitenden Prüfköpfen nicht nur ein, sondern drei verschiedene Empfänger-Prüfköpfe dargestellt sind, die zu je einem besonderen Einschallwinkel und Schielwinkel des Sende-Prüfkopfes gehören;

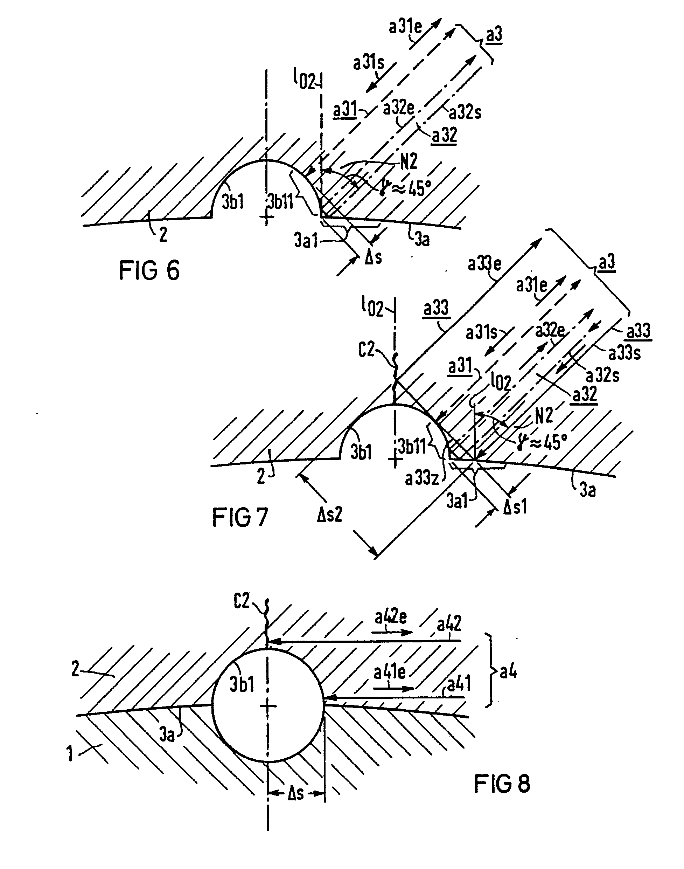

Fig. 6 das in Fig. 2 dargestellte physikalische Prinzip, ausgenutzt zur Erkennung von Fehlern im Bereich der axialen Verdrehsicherungsbohrungen am Nabeninnenumfang einer Radscheibe, wobei in Fig. 6 eine fehlerfreie Verdrehsicherungsbohrung vorliegt;

Fig. 7 den Gegenstand nach Fig. 6 mit dem Unterschied, daß eine fehlerbehaftete Verdrehsicherungsbohrung vorliegt und sich deshalb im Vergleich zu Fig. 6 ein drittes Echo (das Fehlerecho) ergibt;

Fig. 8 ein anderes Prüfprinzip zur Erkennung von Fehlerstellen im Bereich der axialen Verdrehsicherungen mit "streifendem Einfall" der US-Strahlenbündel (das in Fig. 2, 6 und 7 dargestellte Prüfprinzip wird im Unterschied dazu auch als Winkelspiegelmethode bezeichnet);

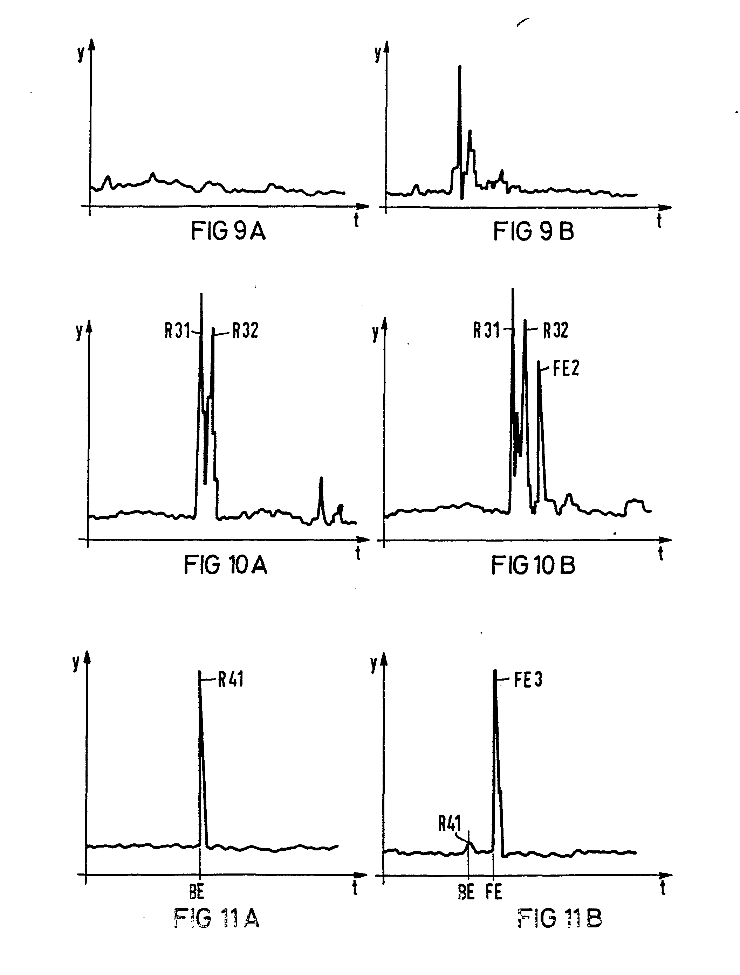

Fig. 9 in ihrem Teil A ein Diagramm nach einem Bildschirmfoto, aufgenommen bei der US-Prüfung einer fehlerfreien Nabeninnenoberfläche, und in ihrem Teil B ein Diagramm nach einem Bildschirmfoto mit einer US-Anzeige, die von einer axial-radial orientierten Fehlerstelle an der Nabeninnenoberfläche (vgl. Fig. 2) herrührt;

Fig. 10 im Teil A ein Diagramm nach einem Bildschirmfoto mit zwei US-Anzeigen von einer fehlerfreien axialen Verdrehsicherungsbohrung entsprechend Fig. 6 und in ihrem Teil B ein entsprechendes Diagramm mit drei US-Anzeigen von einer fehlerbehafteten axialen Verdrehsicherungsbohrung entsprechend Fig. 7;

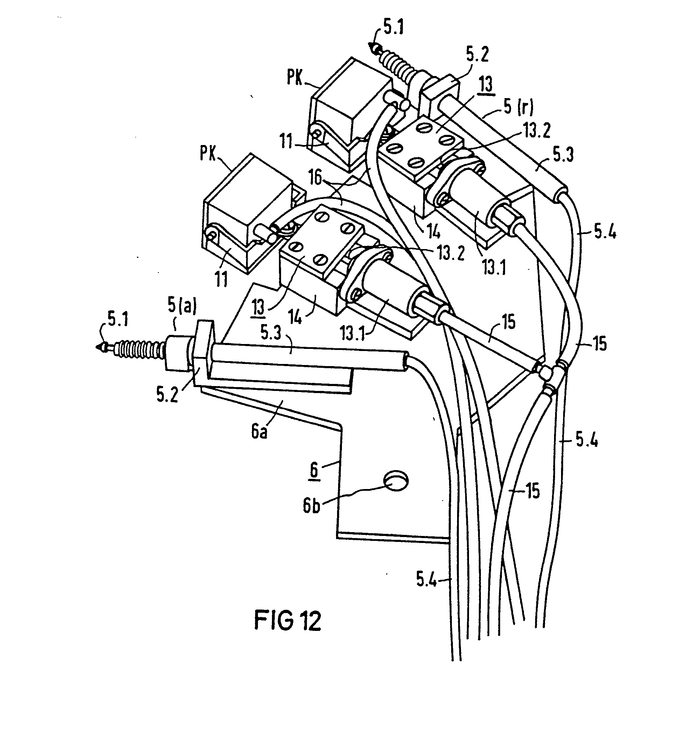

Fig. 11 in ihrem Teil A ein Diagramm mit einem Bohrungsecho bei einer fehlerfreien Verdrehsicherungsbohrung, gewonnen aus einem Bildschirmfoto unter Anwendung der Methode des streifenden Einfalls nach Fig. 8, und in ihrem Teil B ein entsprechendes Diagramm mit einem Fehlerecho, das wesentlich größer ist als das Bohrungsecho, so daß die Signalverstärkung reduziert werden mußte;

Fig. 12 perspektivisch eine Prüfkopfhalterung eines Schablonenbleches mit daran befestigten zwei US-Winkelprüfköpfen sowie zwei zugehörigen Meßtastern einschließlich zugehöriger pneumatischer, hydraulischer und elektrischer Versorgungsleitungen;

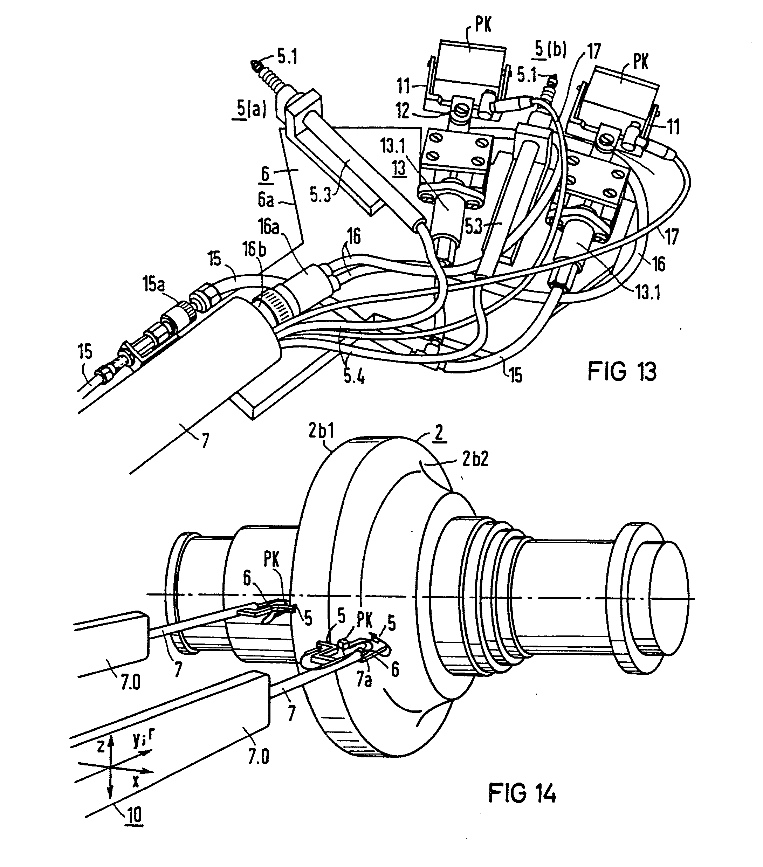

Fig. 13 den Gegenstand nach Fig. 12, montiert am Ende eines Manipulatorarmes und aufgesetzt auf die Seitenwange einer Radscheibe;

Fig. 14, gleichfalls perspektivisch, zwei Manipulatorarme, an ihren Enden jeweils versehen mit einer Prüfkopfhalterung in der Art nach Fig. 12 und 13 und positioniert und angekoppelt an je einer Seitenwange einer Test-Radscheibe zur Durchführung des Prüfverfahrens nach dem Prinzip der Tandem-Technik; und

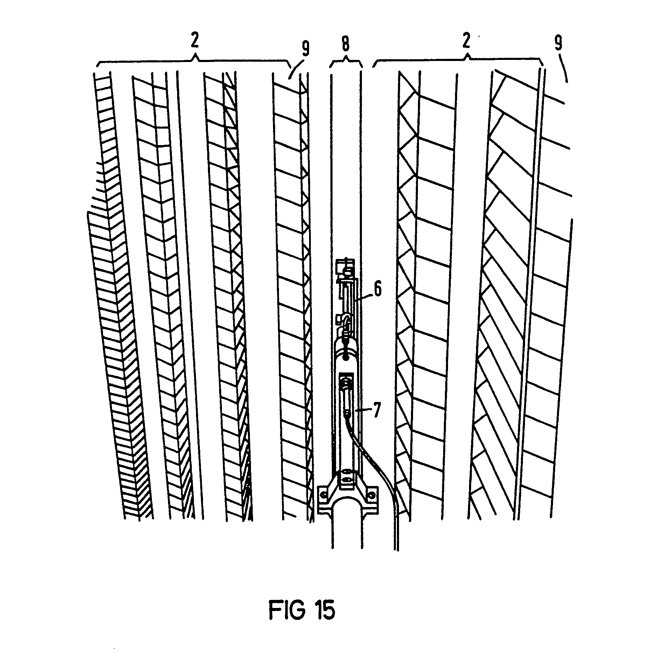

Fig. 15 die perspektivische Ansicht eines Ausschnittes mehrerer auf eine Welle aufgeschrumpfter, axial aneinandergereihter Radscheiben, wobei in den Axialspalt zwischen den Radkränzen zweier einander benachbarter Radscheiben der Manipulatorarm mit der Prüfkopfhalterung an seinem Ende in eine Stellung kleinster radscheiben-axialer Erstreckung gedreht ist (Einschleuseposition).

Durch die in Fig. 1 dargestellte Meßanordnung wird ein Verfahren zur US-Prüfung von auf Wellen 1 aufgeschrumpften Scheibenkörpern 2 im Bereich der Schrumpfsitze 3 und der angrenzenden Materialbereiche verwirklicht. Insbesondere bezieht sich die US-Prüfung auf die Schrumpfsitze 3 im Bereich der Nabeninnenoberflächen 3a und die axialen Verdrehsicherungen 3b bei Radscheiben 2 von Niederdruck-Turbinenläufern, wobei die Radscheiben 2, wie in Fig. 1 beispielhaft angedeutet, im Querschnitt gesehen von ihrer Nabenpartie 2a in radialer Richtung r von innen nach außen sich etwa keulenförmig bis zu einem Radkranz 2c verjüngende Seitenwangen 2b1, 2b2 aufweisen. Diese Radscheibengeometrie ist für eine US-Prüfung der nicht zugänglichen Nabeninnenoberfläche 3a und der axialen Verdrehsicherungen 3b äußerst kompliziert, wobei noch hinzukommt, daß zwischen den Radkränzen der aufgeschrumpften Scheiben, vgl. Fig. 15, nur ein sehr geringer axialer Zwischenraum besteht.

Nach dem neuen Verfahren werden an den Seitenwangen 2b1, 2b2 US-Prüfköpfe, die generell mit PK bezeichnet werden, zum Abfahren von in Umfangsrichtung u (vgl. Fig. 4) verlaufenden Prüfbahnen angekoppelt, die nach dem Prinzip der Kantenreflexion von Transversalwellen im Auftreffwinkelbereich der Totalreflexion arbeiten und deren US-Strahlenbündel a bzw. b auf die Prüfbereiche A1 (erster äußerer axialer Prüfbereich) und B (mittlerer axialer Prüfbereich) der Nabeninnenoberfläche 3a gerichtet sind und auch auf den zweiten axialen Prüfbereich A2 gerichtet werden können. Das Phänomen der Totalreflexion von Transversalwellen in einem Auftreffwinkelbereich $35° \leq \gamma \leq$ ca. $55°$ (Winkelspiegeleffekt) und das Phänomen der Totalreflexion sind an sich bekannt.

Diese Phänomene werden erfindungsgemäß zum Auffinden, Lokalisieren und Interpretieren von im wesentlichen axialradial orientierten Fehlerstellen C1, die aufgrund von Spannungsrißkorrosion entstehen können, ausgenutzt, siehe zunächst Fig. 2. Dort ist schematisch dargestellt, wie von einem US-Prüfkopf PK ein US-Strahl a1s über eine nicht näher gezeichnete Ankopplungsfläche in die Radscheibe 2 eintritt und auf eine im wesentlichen rechtwinklige Kante im Bereich der Nabeninnenoberfläche 3a auftrifft, welche durch ein Teilstück der Grenzfläche 3a1 der Nabeninnenoberfläche und eine axial-radial orientierte Fehlerstelle C1 gebildet wird. Wie man sieht, wird der US-Strahl als nach einer doppelten Reflexion an den Flächen 3a1/C1, die die Kante oder Nische N1 bilden, parallel zu sich selbst reflektiert und kann von dem Prüfkopf PK, der in diesem Falle als US-Sende- und zugleich -Empfänger-Prüfkopf ausgebildet ist, als reflektierter Strahl a1e einer Transversalwelle nach dem Prinzip der Impuls-Echo-Technik wieder empfangen werden. Als Ganzes ist der US-Strahl mit a1 bezeichnet. Fig. 2 stellt also eine, wenn auch stark chematisierte, Ansicht in Richtung des Pfeiles II auf die eine Stirnseite der Radscheibe 2 dar, wobei in Fig. 2 auch der tangentiale Einschallwinkel $\alpha_t$ eingezeichnet ist. $l_o$ ist das Lot auf den Schalleintrittspunkt des US-Strahls als im Bereich der Ankopplungsfläche des Prüfkopfes PK, wobei bei Betrachtung in Achsrichtung (Fig. 2, Fig. 4) sich der tangentiale Einschallwinkel $\alpha_t$ und bei Betrachtung in achsnormaler Richtung (Fig. 1, Fig. 3) sich der axiale Einschallwinkel $\alpha_a$ ergibt. Für den resultierenden Einschallwinkel $\alpha$, der vom US-Strahl a1s und dem Lot $l_o$ aufgespannt wird, gilt:

$$\alpha = \text{arc tan} \cdot \sqrt{\tan^2 \alpha_a + \tan^2 \alpha_t} \cdot$$

Vom Einschallwinkel $\alpha$ ist zu unterscheiden der Schielwinkel $\delta$ der US-Strahler, der bei den verwendeten US-Winkelprüfköpfen PK definiert ist als der Winkel zwischen dem auf die Prüffläche (2b1, 2b2) projizierten Hauptstrahl a1 und der parallel zur Prüffläche liegenden Prüfkopfachse 4. Es gilt:

$$\text{Schielwinkel } \delta = \text{arc tan } \frac{\tan \alpha_a}{\tan \alpha_t}.$$

Der Schielwinkel $\delta$ ist bei Draufsicht auf den Prüfkopf PK′ (Fig 2, oben) zu erkennen wogegen der Prüfkopf PK entsprechend der Seitenwangenkontur gekippt dargestellt ist. Der Auftreffwinkel $\gamma$, in den Beispielen bevorzugt etwa 45° betragend, ist definiert als der Winkel zwischen dem Hauptstrahl a1 und der Normalen $l_{o2}$ an der Auftreffstelle des Reflektors. Der Auftreffwinkel $\gamma \approx 45°$ liegt im Bereich zwischen 35° und 55° etwa im Optimum, was die Echoamplitude angeht. Analoges gilt für die Methode des streifenden Einfalls, wobei in diesem Fall der Auftreffwinkel $\gamma$ bevorzugt etwa 90° beträgt.

Zurückkommend auf Fig. 1 erkennt man, daß die Hauptstrahlen a dort als kegelförmige US-Strahlenbündel dargestellt sind, um anzudeuten, daß mit jedem US-Strahlenbündel a bzw. im einzelnen a11, a12, a13 usw.; b21, b22 usw. ein bestimmter axialer Teilbereich der axialen Prüfbereiche A1, A2 und B überstrichen werden kann. Die Nabeninnenoberfläche 3a wird nun gemäß einem weiteren Verfahrensmerkmal in mindestens drei axiale Prüfbereiche unterteilt: einen mittleren Prüfbereich B und die beiden angrenzenden äußeren Prüfbereiche A1, A2. Mit A2b ist der Bereich der axialen Verdrehsicherungen 3b bezeichnet, der vom Schrumpfsitzbereich 3 durch eine abgerundete Eindrehung 3c separiert ist. Die axialen Verdrehsicherungen können z. B. aus im Querschnitt halbkreisförmigen Nuten am Innenumfang der Nabe bestehen, denen entsprechende, im Querschnitt halbkreisförmige Nuten am Außenumfang der Welle 1 gegenüberstehen, wobei in den auf diese Weise gebildeten kreisförmigen Grenzflächenkanal runde Axialstifte eingefügt bzw. eingetrieben werden können, welche in regelmäßigen Abständen über den Außenumfang der Welle 1 bzw. den Innenumfang der Nabe 2, z. B. an fünf Stellen, verteilt sind. Auch diese Zone oder dieser Teilbereich der axialen Verdrehsicherungen muß USgeprüft werden, weil auch im Bereich der axialen Verdrehsicherungen Oberflächenspannungen bestehen.

Die beiden äußeren axialen Prüfbereiche A1, A2 werden nun nach dem Prinzip der Impuls-Echo-Technik mit US-Winkelprüfköpfen geprüft, die generell in Fig. 1 mit PK1 und in Fig. 3 im einzelnen mit PK11 bis PK13 bezeichnet sind. D. h., der US-Strahl bzw. das US-Strahlenbündel des betreffenden Prüfkopfes PK1, welches auf einen Fehler C1 gemäß Fig. 2 trifft, wird an der rechtwinkligen Kante zweimal total reflektiert und folglich parallel zu sich selbst reflektiert, so daß es zum Prüfkopf PK1 wieder zurückkehrt und dort als Fehlersignal empfangen werden kann. Dies gilt, wie gesagt, für den Prüfbereich A1 und auch für den Prüfbereich A2, wobei letzterer den Teilbereich A2b (Zone der axialen Verdrehsicherungen) und den Teilbereich A2a (Schrumpfsitz-Teilbereich) umfaßt.

Der mittlere axiale Prüfbereich B der Radscheibe 2 wird dagegen nach dem Prinzip der Tandem-Technik mit mindestens zwei US-Winkelprüfköpfen PK geprüft, die generell mit PK2 und im einzelnen mit PK21 und PK22 bezeichnet sind. PK21 ist im Beispiel der Fig. 1 der Sende-Prüfkopf, welcher auf der Seitenwange 2b1 aufgesetzt ist, und PK22 ist der Empfangs-Prüfkopf, welcher auf der gegenüberliegenden Seitenwange 2b2 der Radscheibe 2 aufgesetzt ist. Das durch Punktierung hervorgehobene US-Strahlenbündel besteht aus dem vom Sende-Prüfkopf PK22s ausgesandten US-Strahlenbündel b22s, welches — so sei angenommen — auf einen Fehler im Bereich der Nabeninnenoberfläche 3a trifft und deshalb als US-Strahlenbündel b22e zum Empfänger-Prüfkopf PK22e reflektiert wird. Auch eine Umkehrung ist möglich, d. h. PK22e Sende- und PK2s Empfänger-Prüfkopf. Durch die übrigen US-Strahlenbündel des Prüfbereiches B, nämlich b21s—b2e und b23s—b23e ist zum Ausdruck gebracht, daß der gesamte mittlere Teilbereich B2 überstrichen und erfaßt werden kann, wobei im Vergleich zu den US-Strahlenbündeln b22s—b22e zum Senden und Empfangen der US-Strahlenbündel b21s—b22e und b23s—b23e andere Prüfköpfe PK2 mit geänderten Einschallwinkeln $\alpha$ und Schielwinkeln $\delta$ Verwendung finden, da ihre Posi-

4

tionierung auf der Seitenwangenkontur 2b2, wie erkennbar, verschoben ist (Empfängerseite) und auf der Senderseite (Seitenwange 2b1) ihre Position unter Umständen auch verschoben sein kann.

Wenn man Fehler suchen und ermitteln will, die im axialen Teilbereich B1 liegen, so ist es sinnvoll, den Sende-Prüfkopf auf der Seitenwange 2b2 anzukoppeln und die Empfänger-Prüfköpfe auf der Seitenwange 2b1, also unter Umkehrung der Prüfkopfanordnung in Fig. 1. Demgemäß wird der mittlere Prüfbereich B in mindestens 2 einander überlappende Teilbereiche B1, B2 unterteilt, wovon der eine Teilbereich B2 (bzw. B1) mit Sende-Prüfköpfen PK21 beschallt wird, die auf der ihn abgelegenen Seitenwange 2b1 (bzw. 2b2) angeordnet werden. Dabei wird der US-Strahl bzw. das US-Strahlenbündel im Fehlerfalle zu Empfangs-Prüfköpfen PK22 reflektiert, welche auf der dem Teilbereich B2 (bzw. B1) anliegenden Seitenwange 2b2 (bzw. 2b1) angeordnet werden, bzw. umgekehrt.

Wie es anhand der US-Strahlenbündel a11 bis a16 verdeutlicht ist, wird auch der äußere Prüfbereich A1 in mehrere axiale Teilbereiche unterteilt, die entsprechend der Bezeichnung der US-Strahlenbündel mit A11, A12 usw. bezeichnet sind. Entsprechend kann auch der andere äußere Bereich A2 noch feiner als in die Teilbereiche A2a, A2b unterteilt werden, nämlich in die Teilbereiche A21, A22 usw. bis A26. Jeder dieser Teilbereiche A11, A12 usw.; A21, A22 usw. wird mit mindestens einem US-Winkelprüfkopf geprüft. Es hat sich jedoch als vorteilhaft erwiesen, soweit als möglich Mehrfach-Prüfkopfhalterungen zu verwenden, mit denen dann mehr als ein Teilbereich geprüft werden kann.

Sinngemäß zur Feinunterteilung der äußeren Prüfbereiche A1, A2 ist in Fig. 2 auch die Feinunterteilung für den mittleren Prüfbereich B2 in Form der Teilbereiche B21, En B22 und B23 eingetragen. Entsprechendes gilt für den mittleren Unterbereich B1.

Die einzelnen Teilbereiche A11 usw., B11, B21 usw., A21 usw. haben in axialer Richtung eine Breite, die sich aus der Divergenz der Schallfelder und der Größe bzw. Länge der Schallwege zwischen der Ankopplungsposition der Prüfköpfe PK an der Radscheibenwange 2b1 bzw. 2b2 bis zum eventuell vorhandenen Fehler an der Nabeninnenoberfläche 3a ergibt, z. B. ca. 25 bis 50 mm.

Zur Prüfung eines solchen Teilbereiches ist es erforderlich, jeweils einen (für die Tandem-Technik 2) durch die geometrischen Verhältnisse dieses Teilbereiches bestimmten US-Winkelprüfkopf an einer ganz bestimmten Position der Radscheibenwange 2b1, 2b2 anzukoppeln. Durch Rotation der Radscheiben erstrecken sich die einzelnen Teilbereiche dann in Umfangsrichtung u über 360°.

Wie es Fig.1 und noch deutlicher Fig. 3, Fig. 4 zeigen, sind — um 100% der Nabeninnenoberfläche der Radscheiben 2 zu prüfen — eine große Anzahl von Prüfkopfpositionen an den Radscheibenwangen 2b1, 2b2 erforderlich. Diese Positionen sind durch die axialen Koordinaten in Richtung x, die im einzelnen mit x1, x2 usw. bezeichnet sind, und die radialen Koordinaten in Richtung r bestimmt. Bei den radialen Koordinaten ist zu unterscheiden zwischen den Prüfdurchmessern $D_1$, $D_2$ usw. auf denen die Prüfköpfe PK angeordnet sind, und den Durchmessern d1 (Nabeninnenoberfläche) und d2 (stirnseitige Ausdrehung), also radialen Koordinaten, die durch die Form der Radscheibe selbst vorgegeben sind. Die charakteristischen Werte der Prüfköpfe PK, der Einschallwinkel α und der Schielwinkel δ, sind nun von den geometrischen Verhältnissen an der jeweiligen Prüfkopfposition abhängig. In Fig. 3 sind mehrere verschiedene, von den einzelnen Prüfkopfpositionen abhängige axiale Einschallwinkel $\alpha_a$ (allgemein) und $\alpha_{a1}$, $\alpha_{a2}$ usw. speziell in axialer Richtung zu erkennen. Der Einschallwinkel α und der Schielwinkel δ sind eine Funktion der radialen Koordinaten D,d oder auch abgekürzt α, δ = f (D,d). Dies ist der Grund, weshalb für die US-Prüfung von beispielsweise 10 Radscheiben eines ND-Läufers mit ca. 160 Prüfteilbereichen selbst nach einer Optimierung ca. 40 US-Spezialwinkelprüfköpfe und ca. 50 verschiedene Prüfkopfhalterungen erforderlich sind. In Fig. 3 sind die nach dem Prinzip der Impuls-Echo-Technik arbeitenden Prüfköpfe (ein Prüfkopf dient zum Senden eines US-Strahls und gleichzeitig zum Empfangen des reflektierten US-Stahls) generell mit PK1 und im einzelnen — abhängig von ihrer Position auf der Seitenwange — mit PK11, PK12 und PK13 bezeichnet. Die nach dem Prinzip der Tandem-Technik arbeitenden Prüfköpfe sind generell mit PK2 und im einzelnen mit PK2S (Sende-Prüfkopf) und PK2e (Empfänger-Prüfkopf) bezeichnet. Die Ziffern bei den im einzelnen bezeichneten US-Strahlen- bzw. US-Strahlenbündeln a11, a12 usw.; b21, b22 usw. koinzidieren mit den Ziffern bei den zugehörigen axialen Prüfteilbereichen und Prüfköpfen PK1, von denen diese US-Strahlen ausgehen bzw. — im Falle des Prüfkopfes PK22e — von denen sie empfangen werden. Da der zur Durchführung der Tandem-Prüfung dienende Sende-Prüfkopf gemeinsam für drei US-Strahlen b21, b22, b23 und ihre Teilbereiche B21, B22, B23 dargestellt ist, wurde er mit PK2s bezeichnet. Die in Fig. 3 dargestellten axialen Einschallwinkel $\alpha_{a1}$ bis $\alpha_{a4}$ liegen im Bereich zwischen 30 und 50°, der axiale Einschallwinkel $\alpha_{a5}$ des Empfängerprüfkopfes PK22e beträgt etwa 20°.

Die in Fig. 4 dargestellten tangentialen Einschallwinkel $\alpha_{t1}$ des Prüfkopfes PK11 und $\alpha_{t4}$ des Prüfkopfes PK2S liegen bei etwa 20 bzw. 15°; sie sind um so kleiner, je weiter der Abstand des Prüfkopfes vom Wellenmittelpunkt M ist. Die zugehörigen Auftreffwinkel γ1 bzw. γ2 liegen entsprechend zur Darstellung nach Fig. 2 jeweils bei etwa 45°. Der vom Prüfkopf PK11 ausgehende US-Strahl a11s wird an der Nabeninnenoberfläche (Grenzfläche) total reflektiert und kehrt — wenn kein Fehler vorliegt — nicht zum Prüfkopf PK11 zurück, sondern setzt seinen Weg als irrelevanter Reflexionsstrahl a'11 in der Radscheibe bis zu seiner Totalabschwächung fort. Entsprechendes gilt für den vom Prüfkopf PK22e ausgehenden US-Strahl b22s; dieser Strahl würde an sich bei Vorliegen eines Fehlers so, wie in Fig. 3 dargestellt, vom Prüfkopf PK22e als zweimal total reflektierter Strahl empfangen werden. In Fig. 4 ist indessen angenommen, daß am Nabeninnenumfang kein Fehler vorliegt, und so wird dieser Strahl b22s zwar einmal total reflektiert, jedoch kein zweites Mal, so daß er als irrelevanter reflektierter Strahl a'22 sich in der Radscheibe 2 bis zu seinem Erlöschen fortpflanzt.

Anhand eines durchsichtigen Modells aus Kunststoff sind in Fig. 5 zum besseren Verständnis die Verhältnisse noch einem dargestellt, wobei angenommen wird, daß am Nabeninnenumfang 3a entsprechende Fehlerstellen existieren, welche eine zweifache Totalreflexion im Kantenbereich, so wie anhand von Fig. 2 erläutert, bewirken. Die nach der Impuls-Echo-Technik arbeitenden US-Winkelprüfköpfe sind sinngemäß zu Fig. 3 wieder mit PK11, PK12 und PK13 bezeichnet, die zugehörigen US-Strahlen mit a11, a12, a13. Jeden dieser US-Strahlen kann man sich aus einem Sendestrahl a11s, a12s, a13s und einem im Fehler-Kantenbereich reflektierten Strahl a11e, a12e, a13e, der zum Prüfkopf zurückläuft, zusammengesetzt denken (vgl. Fig. 2). Die Doppelstrahligkeit ist der Einfachheit halber bei den Prüfköpfen PK11 bis PK13 nicht dargestellt; sie ist es jedoch bei den nach der Tandem-Technik arbeitenden Prüfköpfen PK2S (Sende-Prüfkopf) und PK21 bis PK23 (Empfänger-Prüfköpfe). Ausgehend vom Prüfkopf PK2S sind drei verschiedene US-Strahlen b21s, b22s und b23s dargestellt, welche voneinander unterschiedliche Einschallwinkel α und Schielwinkel δ aufweisen, derart, daß durch ihre US-Strahlenbündel der Teilprüfbereich B2, wie ersichtlich, übrestrichen werden kann, wobei sich dann zum Empfangen der an den entsprechenden Fehlerstellen-Nischen doppelt reflektierten US-Strahlen bzw. US-Strahlenbündel auch die Positionierung für die Empfänger-Prüfköpfe PK21e bis PK23e, wie dargestellt, ändert, deren zugeordnete und von ihnen empfangene US-Strahlen bzw. -Strahlenbündel mit b21e, b22e und b23e bezeichnet sind. Der von den Prüfköpfen PK11 bis PK13 überstrichene axiale Teilprüfbereich ist wieder mit A1 bezeichnet.

Fig. 6 und zeigen in entsprechender Darstellung zu Fig. 2 die US-Reflexions-Verhältnisse im Bereich einer axialen Verdrehsicherungsbohrung 3b1, und zwar in Fig. 6 bei fehlerfreier Bohrung und in Fig. 7 unter der Voraussetzung, daß eine axial-radial orientierte Fehlerstelle C2 vorliegt, die sich vom Innenumfang der halbkreisförmigen Bohrung 3b1 in den Nabenkörper 2 um etwa 5 bis 10 mm erstreckt. Diese im Querschnitt halbkreisförmige Bohrung 3b1 ist in dem Axialbereich 3b nach Fig. 1 angeordnet zu denken. Zunächst zu Fig. 6. Dort sei angenommen, daß von einem nicht dargestellten, geeigneten US-Prüfkopf ein US-Strahlenbündel unter einem derartigen Einschallwinkel α und Schielwinkel δ seinen Ausgang nimmt, daß es im Bereich der Kante bzw.

Nische N2 unter einem Auftreffwinkel von γ ≈ 45° auftrifft. Die Nische N2 ist begrenzt durch das Teilstück 3a1 des Nabeninnenumfanges 3a und durch das Bogenstück 3b11 der halbzylinderförmigen Grenzflächen der Verdrehsicherungsbohrung 3b1. Das US-Strahlenbündel a3 kann man sich in 2 Teilbündel a31 und a32 unterteilt denken: ein erstes, am Bohrungsumfang unter einem Auftreffwinkel von ≈ 90° in sich selbst reflektiertes Teilstrahlenbündel a31 und ein zweites im Nischenbereich totalreflektiertes oder winkelgespiegeltes Teilstrahlenbündel a32. Zur Verdeutlichung der physikalischen Verhältnisse ist das Teilstrahlenbündel a32 noch in zwei einzelne Teilstrahlen a32s (Sendestrahl) und a32e (Empfängerstrahl — 2x in der Nische totalreflektiert —) untergliedert. Für das Teilstrahlenbündel a31 sind durch Richtungspfeile der zum Bohrungsumfang hinlaufende Teilstrahl a31s und der an der Grenzfläche reflektierte und zurücklaufende Teilstrahl a31e angedeutet. △s ist die einfache Wegdifferenz der Teilstrahlenbündel a31 und a32 voneinander, wobei das Teilstrahlenbündel a32 bei Hin- und Rücklauf eine etwa um 2x △s größere Wegstrecke (Gang- oder Schallwegunterschied) zurücklegen muß.

In Fig. 7 sind soweit als möglich die gleichen Bezugszeichen wie in Fig. 6 verwendet. Durch einen Vergleich stellt man fest, daß aufgrund des axial-radial orientierten Fehlers C2 ein Ultraschallstrahl a33s, der normalerweise nach einmaliger Totalreflexion im Kantenbereich (Auftreffwinkel γ ≈ 45°) verlorengehen würde, nun an den Fehlergrenzflächen ein zweites Mal total reflektiert wird gemäß Winkelspiegeleffekt und deshalb als reflektierter Strahl a33e vom Prüfkopf als Fehlersignal empfangen werden kann. Das tangential zur Bohrung 3b1 verlaufende Teilstück des insgesamt mit a33 bezeichneten US-Strahls ist durch a33z symbolisiert.

Fig. 9 und 10 zeigen Beispiele von US-Anzeigen auf dem Bildschirm, die als vereinfachte Diagramm-Kurven dargestellt sind, wobei auf der Ordinatenachse die Amplitude y und auf der Abszissenachse die Zeit t aufgetragen ist. Fig. 9A stellt ein Bildschirmfoto bei der US-Prüfung einer fehlerfreien Nabeninnenoberfläche dar (kein Fehlersignal, vgl. z. B. Fig. 4). Fig. 9B stellt ein Bildschirmfoto mit einer US-Anzeige von einer axial-radial orientierten Fehlerstelle an der Nabeninnenoberfläche 3a dar, z. B. der Fehlerstelle C1 aus Fig. 2. Das Fehlerecho FE1 ist durch die größte Zacke dargestellt.

In Fig. 10A ist ein Bildschirmfoto mit zwei US-Anzeigen R31 und R32 von einer fehlerfreien axialen Verdrehsicherungsbohrung entsprechend Fig. 6 dargestellt, wobei die Anzeige R31 zum US-Strahl a31 und die Anzeige R32 zum US-Strahl a32 gehört. Entsprechend dem Schallwegunterschied von ungefähr zweimal △s ist die Anzeige R32 gegenüber der Anzeige R31 etwas verzögert.

In Fig. 10B ist ein Bildschirmfoto mit drei US-Anzeigen R31, R32 und FE2 von einer fehlerbehafteten axialen Verdrehsicherungsbohrung entsprechend Fig. 7 dargestellt. Es ist also die Fehleranzeige FE2 im Vergleich zu Fig. 10A hinzugekommen, welche zum reflektierten US-Strahl a33e gehört, der im Vergleich zum unter 90° auftreffenden Strahl a31 einen Schallwegunterschied von $\triangle s_2$ hat, wogegen die US-Anzeige R32, entsprechend dem US-Strahl a32 einen Schallwegunterschied von angenähert zweimal $\triangle s_1$ zum US-Strahl a31 aufweist. Die Schallwegunterschiede $\triangle s_1$ und $\triangle s_2$ sind in Fig. 7 schematisch angedeutet.

Zusätzlich zu oder anstelle der Winkelspiegel-Methode nach Fig. 6, 7 und 10 kann zur Ermittlung von axial-radial orientierten Fehlern im Bereich der axialen Verdrehsicherungen, insbesondere der Verdrehsicherungsbohrungen gemäß Fig. 8, auch mit einem streifenden Einfall der US-Strahlenbündel gearbeitet werden. In dieser Figur ist das US-Strahlenbündel generell mit a4 bezeichnet; es fällt "streifend" bezüglich der Nabeninnenoberfläche 3a von außen auf einen Quadranten der gesamten, sich über 360° erstreckenden Verdrehsicherungsbohrung 3bl deren oberer Halbzylinder in der Radscheibe 2 und deren unterer Halbzylinder in der Welle 1 sich befindet. Bei Fehlerfreiheit ergibt sich gemäß Fig. 11A lediglich ein Bohrungsecho R41, dessen Zeitmarke mit BE bezeichnet ist und welches zu dem zurücklaufenden US-Teilstrahl a41e aus Fig. 8 gehört. Der Auftreffwinkel dieses Teilstrahls a41 auf den Bohrungsumfang beträgt angenähert 90°. Wie man es aus Fig. 8 weiter erkennt, wird im Falle des Fehlers C2 der Teilstrahl a42 an der Fehlergrenzfläche reflektiert, ebenfalls unter einem Auftreffwinelk von 90°, so daß man eine US-Fehleranzeige in Form des Fehlerechos FE3 nach Fig. 11B erhält. Da die Amplitude dieses Fehlerechos relativ groß ist, mußte die Verstärkung des Anzeigegerätes im Vergleich zu Fig. 11A zurückgenommen werden so daß das Bohrungsecho R41 zu einer winzigen Erhebung zusammengeschrumpft ist. Diese klare Differenzierung zwischen Fehler- und Bohrungsecho bei der Methode des streifenden Einfalls läßt diese in den meisten Fällen zur Ermittlung von axial-radial orientierten Fehlern im Bereich der Verdrehsicherungen geeigneter erscheinen als die Winkelspiegel-Methode nach Fig. 6, 7 und 10. Ein Vorteil ist aber, daß man bei schwierigen Fehlerdeutungen sich beider Methoden bedienen kann. Naturgemäß müssen Einschallwinkel α und Schielwinkel δ der US-Prüfköpfe im Falle des streifenden Einfalls nach Fig. 8 anders gewählt werden als bei der Winkelspiegel-Methode nach Fig. 6 und 7.

Im folgenden wird anhand der Fig. 1 bis 4 noch kurz eingegangen auf die Auswahlkriterien für den Übergang von einem äußeren Prüfbereich A1 bzw. A2 auf einen mittleren Prüfbereich B bzw. B1, B2 und damit für den Übergang von der Impuls-Echo-Technik zur Tandem-Technik und umgekehrt.

Als Kriterium wird der Einschallwinkel α an der betreffenden Ankopplungsstelle berechnet, welcher höchstens gleich oder kleiner als 75°, vorzugsweise ≤ 70° sein sollte. Der Grund für dieses Kriterium ist, daß bei Überschreiten der Grenzen die Verwirklichung entsprechender Prüfköpfe mit zugehörigen Einschallwinkeln α auf Schwierigkeiten stößt.

Wie bereits anhand der Fig. 1 bis 4 erläutert, werden abhängig von der jeweiligen, durch axiale und radiale Koordinaten x, r gegebenen Sende- und/oder Empfangsposition der Prüfköpfe PK auf der Seitenwangenkontur 2b1 bzw. 2b2 Spezial-Winkelprüfköpfe mit angepaßten Einschallwinkeln α und Schielwinkeln δ verwendet. Wie es Fig. 12 näher zeigt, werden diese Spezial-Winkelprüfköpfe PK zusammen mit Meßtastern 5 auf einer dem jeweiligen Seitenwangenabschnitt angepaßten, ein Schablonenblech 6a aufweisenden Prüfkopfhalterung 6 angeordnet und werden mit dieser Prüfkopfhalterung 6 — wie es Fig. 13 näher zeigt — am freien, ausfahrbaren Ende 7a eines Manipulatorarmes 7 an die Kontur des anzukoppelnden Abschnittes der betreffenden Seitenwange 2b2 (2b1) herangeführt. Dabei ist jedes der Schablonenbleche (Bei Prüfung von 10 Radscheiben werden etwa 50 verschiedene Schablonenbleche benötigt) einem bestimmten axialen Teilbereich $A_i$, $B_i$ der Prüfbereiche A1, B B1, B2, A2 zugeordnet und wird seine axial und radial korrekte Positionierung durch die Meßtaster 5 angezeigt. Mit anderen Worten, auf jedem Schablonenblech 6a sind die Meßtaster, die insbesondere als induktive Meßtaster ausgeführt sind, zur Überwachung der Positionierung der Winkelprüfköpfe und die Prüfköpfe selbst in jeweils ganz bestimmten Positionen und Relationen zueinander angeordnet, so daß die Umsetzung der Einschall- und Schielwinkel der betreffenden Prüfköpfe bei der Ankopplung an einer bestimmten Position einer Radscheibenwange in die für die bestimmten Prüfbereiche erforderlichen Einschallrichtungen sichergestellt wird.

Zur Vereinfachung des Prüfverfahrens, d. h., insb. zur Reduzierung der erforderlichen Prüfmanipulationen, ist es vorteilhaft, wenn die äußeren axialen Prüfbereiche A1, A2 zumindest teilweise, mit Spezial-Winkelprüfköpfen PK geprüft werden, die mindestens paarweise an den entsprechenden Prüfkopfhalterungen 6 befestigt sind und mit diesen an der zugehörigen Seitenwangenpartie der Radscheibe 2 positioniert werden können, wie es Fig. 12 und 13 zeigen.

Fig. 13 und 14 verdeutlichen, daß die Prüfkopfhalterungen 6 mit ihren Prüfköpfen PK in radialer, insbesondere in radial-horizontaler, Richtung der betreffenden Radscheibe 2 an die Kontur ihrer Seitenwangen 2b2, 2b1 herangeführt werden.

Wie bereits anhand der Fig. 15 angedeutet, wird die Prüfkopfhalterung 6 an ihrem Manipulatorarm 7 bei Vorhandensein von engen Axialspalten 8 zwischen einander benachbarten Radscheiben 2 zunächst in eine Stellung kleinster radscheiben-axialer Erstreckung gedreht und in dieser Drehstellung durch den engen Spalt 8 eingeschleust, siehe Fig. 15. Erst dann wird die Prüfkopfhalterung 6 in die Aufsetzposition, wie sie z. B. aus Fig. 13 hervorgeht, gedreht. In Fig. 15 sind mit 9 die Schaufelkränze der beiden einander mit engem Axialspalt benachbarten Radscheiben 2,2 bezeichnet. Diese Schaufelkränze 9 sind in entsprechende Umfangsnuten des Radscheibenkranzes 2c (vgl. Fig. 1, Fig. 3) eingefüllt bzw. eingefügt. Die Umfangsnuten sind in Fig. 1, Fig. 3 der Einfachheit halber nicht dargestellt, man erkennt jedoch den axial vorspringenden Radkranz, der im Beispiel nach Fig. 15 noch weiter axial vorspringen würde, als es der Darstellung in Fig. 1 und Fig. 3 entspräche.

Die Einrichtung zur Durchführung des Verfahrens ist als Ganzes am besten aus Fig. 14 erkennbar. Dabei ist ein Manipulator 10 mit wenigstens einem Manipulatorarm 7 vorgesehen. Dieser Manipulatorarm 7 ist innerhalb eines Tragarmes 7.0 ein- und ausfahrbar in Richtung y bzw. r gelagert. Es handelt sich beim Arm 7 also um eien Teleskoparm, der außerdem um seine eigene Längsachse drehbar ist, wie bereits erläutert. Die Koordinate y gilt allgemein für das Ein- und Ausfahren, die Koordinate r für den Fall, daß der Manipulatorarm 7 auf einem Durchmesser der Radscheibe 2 aus- bzw. eingefahren wird. Dargestellt sind in Fig. 14 zwei Manipulatorarme 7, die zusammen mit ihren Tragarmen 7.0 jeweils nicht nur in Richtung y bzw. r verstellbar sind, wie es das eingezeichnete Achsenkreuz verdeutlicht, sondern auch in Richtung x (Längskoordinate) und in Richtung z (Höhenkoordinate), jeweils in der Plus- und in der Minusrichtung. In der jeweils exakten Ankopplungsposition, wenn die Prüfkopfhalterungen 6 mit ihrem Prüfkopf PK oder mehreren davon an die Seitenwange 2 angekoppelt sind, wird diese Justierposition am Manipulator 10 fixiert, und die betreffende Radscheibe 2 kann zum Abfahren der in Umfangsrichtung u verlaufenden Prüfbahnen langsam gedreht werden. Bei entsprechender Zugänglichkeit zum Außenumfang der Radscheiben könnte ein Manipulator 10 vorgesehen sein, dessen aus- und einfahrbarer Arm auch in Umfangsrichtung u um die Achse m der Radscheibe 2 (vgl. Fig. 3) herum oder zumindest um einen Teil des Umfanges verstellbar ist.

Anhand der Fig. 12 und Fig. 13 wurde bereits erläutert, daß am freien Ende des Manipulatorarmes 7 verschiedene Prüfkopfhalterungen 6 mit ihren Schablonenblechen 6a auswechselbar zu befestigen sind, wobei die Schablonenbleche 6a mit den darauf befestigten Spezialwinkelprüfköpfen PK und den Meßtastern 5 an die Seitenwangenkontur des betreffenden axialen Teilbereiches A₁, B₁ der Prüfbereiche A1, B, B1, B2, A2 angepaßt sind. Gemäß Fig. 12, Fig. 13 sind wenigstens zwei Meßtaster 5, einer für die radiale und der andere für die axiale Positionskontrolle, an der Prüfkopfhalterung 6 befestigt. In Fig. 12, 13 dient jeweils der rechte Meßtaster zur radialen und der linke Meßtaster zur axialen Positionskontrolle, was durch die in Klammern gesetzten Buchstaben r bzw. a verdeutlicht ist. Beide Meßtaster sind also so geeicht, daß sie das entsprechende Positions-Quittungs-Signal abgeben, wenn die Prüfköpfe PK ihre exakte Ankopplungsposition eingenommen haben. Grundsätzlich könnte noch ein weiterer Meßtaster vorgesehen sein (nicht dargestellt), welcher zur Gewinnung eines Kontrollsignals dienen könnte, oder es könnte jedem der beiden Meßtaster 5 in Fig. 12 je ein weiterer Kontroll-Meßtaster zugeordnet sein (ebenfalls nicht dargestellt). Diese Meßtaster 5 sind bevorzugt induktive Meßtaster mit axial federbelasteten Taststiften 5.1, deren dem Tastkopf 5.2 abgewandte Enden jeweils einen zur wegabhängigen Verstimmung einer nicht ersichtlichen Induktionsspulenanordnung dienenden Magnetkern tragen, welcher innerhalb der Rohrhülsen 5.3 angeordnet ist. Mit 5.4 sind die elektrischen Anschlußkabel der Weggeber 5 bezeichnet.

Die Spezial-Winkelprüfköpfe sind kardanisch gelagert. Man erkennt in Fig. 12 eine dazu dienende Gabel 11 und aus Fig. 13 eine die Prüfkopf-Gabelgelenkachse kreuzende Gelenkstelle 12, welche an Kolbenstangen einer pneumatischen Anfederung 13 gelagert ist. Der pneumatikzylinder 13.1 der pneumatischen Anfederung 13 (ihr Kolben ist mit 13.2 bezeichnet) ist an kleinen Konsolen 14 so befestigt, bzw. angeflanscht, daß bei Beaufschlagung der Pneumatikzylinder 13.1 die Prüfköpfe PK gegen ihre Ankopplungsflächen gedrückt werden können. Die kleinen Konsolen 14 sind an den Schablonenblechen 6a festgeschraubt; mit 15 sind die entsprechenden Pneumatikleitungen, die zu den Zylindern 13.l führen, bezeichnet. Aus Fig. 12 und 13 erkennt man ferner die Schlauchleitungen 16 für die Ankopplungsflüssigkeit, welche über ein druckdichtes Kupplungsstück 16a mit dem Zuführungsschlauch 16b verbunden sind. Letzterer ist durch den hohlen Manipulatorarm 7 zusammen mit den Kabeln 5.4 hindurchgeführt; die Pneumatikleitungen 15 sind unter Zwischenschaltung einer pneumatikkupplung 15a analog im Manipulatorarm 7 verlegt. Zur Befestigung am freien Ende des Manipulatorarmes weist das Schablonenblech 6a der Prüfkopfhalterung 6 eine Bohrung 6b auf.

17 sind die elektrischen Signalleitungen der US-Prüfköpfe PK, die in Fig. 14, nicht jedoch in Fig. 13 dargestellt sind.

## Patentansprüche

1. Verfahren zur Ultraschall-Prüfung von auf Wellen aufgeschrumpften Scheibenkörpern im Bereich der Schrumpfsitze und der angrenzenden Schrumpfeinflußzonen, insbesondere im Bereich der Nabeninnenoberflächen und axialer Verdrehsicherungen bei Radscheiben von Niederdruck-Turbinenläufern, wobei die Radscheiben im Querschnitt gesehen von ihrer Nabenpartie in radialer Richtung von innen nach außen sich etwa keulenförmig bis zu einem Radkranz verjüngende Seitenwangen aufweisen, dadurch gekennzeichnet,

daß an den Seitenwangen (2b1, 2b2) US-Prüfköpfe (PK; PK1, PK2) zum Abfahren von in Umfangsrichtung verlaufenden Prüfbahnen (u) angekoppelt werden, die nach dem Prinzip der Kantenreflexion von Transversalwellen im Auftreffwinkelbereich der Totalreflexion, der sogenannten Winkelspiegel-Methode, arbeiten und deren US-Strahlenbündel (a, b) auf die Prüfbereiche der Nabeninnenoberflächen (3a) ausgerichtet sind;

daß im Falle des Vorhandenseins von axialen Verdrehsicherungen (3b) am Nabeninnenumfang (3a) in dessen axialen Außenbereich (A2b) zur Ermittlung von axialradial orientierten Fehlern (C2) die vorgenannte Winkelspiegel-Methode und/oder die Methode des streifenden Einfalls angewendet wird, bei der die Grenzflächen von axialen Verdrehsicherungen, insbesondere Verdrehsicherungsbohrungen (3b1), derart streifend angeschallt werden, daß sich bei Fehlerfreiheit nur ein Bohrungsecho (BE, R 41) aufgrund eines 90°-Auftreffwinkels ergibt, im Fehlerfalle dagegen zusätzlich ein zweites, in der Amplitude wesentlich größeres Fehlerecho (FE, 3), wobei der Auftreffwinkel (γ) an den Fehlergrenzflächen ebenfalls ≈ 90° beträgt;

daß die Nabeninnenoberfläche in mindestens drei axiale Prüfbereiche unterteilt wird: einen mittleren Prüfbereich (B) und die beiden angrenzenden äußeren Prüfbereiche (A1, A2);

daß die äußeren Prüfbereiche (A1, A2) nach dem Prinzip der Impuls-Echo-Technik mit US-Winkel-Prüfköpfen geprüft werden und

daß der mittlere Prüfbereich (B) nach dem Prinzip der Tandem-Tichnik mit mindestens zwei US-Winkel-Prüfköpfen (PK2) geprüft wird, wovon der eine Sende-(Empfangs-) Prüfkopf (PK2s) auf der einen Seitenwange (2b1) und der andere Empfangs- (Sende-) Prüfkopf (PK22e) auf der anderen Seitenwange (2b2) der Radscheibe (2) angeordnet wird.

2. Verfahren nach Anspruch 1, dadurch gekennzeichnet, daß der mittlere Prüfbereich (B) in mindestens zwei einander überlappende Teilbereiche (B1), (B2) unterteilt wird, wovon der eine Teilbereich (B2) bzw. (B1) mit Sende-Prüfköpfen (PK2s) beschallt wird, die auf der ihm abgelegenen Seitenwange (2b1) bzw. (2b2) angeordnet werden und der Schallstrahl (b) im Fehlerfalle zu Empfangs-Prüfköpfen (PK22e) reflektiert wird, welche auf der dem Teilbereich (B2) bzw. (B1) anliegenden Seitenwange (2b2) bzw. (2b1) angeordnet werden, und umgekehrt.

3. Verfahren nach einem der Ansprüche 1 oder 2, dadurch gekennzeichnet, daß auch die äußeren Prüfbereiche (A1, A2) in mehrere axiale Teilbereiche (A11, A12, A13.... usw.; A21 A22, A23.... usw., allgemein Aᵢ) unterteilt werden und jeder der axialen Teilbereiche (Aᵢ) mit mindestens einem US-Winkelprüfkopf (PK1, PK11, PK12....usw.) geprüft wird.

4. Verfahren nach Anspruch 2 oder 3, dadurch gekennzeichnet, daß abhängig von der jeweiligen durch axiale und radiale Koordinaten (x; r) gegebenen Sende- und/oder Empfangsposition der Prüfköpfe auf der Seitenwangenkontur Spezial-Winkelprüfköpfe (PK) mit angepaßten Einschallwinkeln (α) und Schielwinkeln (δ) verwendet werden, daß die Spezial-Winkelprüfköpfe zusammen mit Meßtastern (5) auf dem jeweiligen Seitenwangenabschnitt angepaßten, ein Schablonenblech (6a) aufweisenden Prüfkopfhalterung (6) angeordnet und mit dieser Prüfkopfhalterung (6) an dem freien, ausfahrbaren Ende (7a) eines Manipulatorarmes (7) an die Kontur des anzukoppelnden Seitenwangenabschnittes herangeführt werden, wobei jedes der Schablonenbleche (6a) einem bestimmten Teilbereich (Aᵢ) der Prüfbereiche (A1, B, B1, B2, A2) zugeordnet und seine axial und radial korrekte Positionierung durch die Meßtaster (5) angezeigt wird.

5. Verfahren nach Anspruch 4, dadurch gekennzeichnet, daß zumindest ein Teil der äußeren Prüfbereiche (A1, A2) mit Spezial-Winkelprüfköpfen (PK) geprüft wird, die mindestens paarweise an den entsprechenden Prüfkopfhalterungen (6a) befestigt sind und mit diesen an der zugehörigen Seitenwangenpartie der Radscheibe (2) Positioniert werden.

6. Verfahren nach einem der Ansprüche 1 bis 5, dadurch gekennzeichnet, daß als Kriterium für den Übergang von einem äußeren (A1, A2) zu einem mittleren Prüfbereich (B) und damit von der Impuls-Echo-Technik zur Tandem-Technik und umgekehrt der Einschallwinkel α an der betreffenden Position höchstens gleich oder kleiner als 75°, vorzugsweise ≤ 70° ist.

7. Verfahren nach einem der Ansprüche 1 bis 6, dadurch gekennzeichnet, daß die Prüfkopfhalterungen (6a) mit ihren Prüfköpfen (PK) in radialer, insbesondere radial-horizontaler Richtung (y, r) der Radscheibe (2) an deren Seitenwangenkontur (2b1, 2b2) herangeführt werden.

8. Verfahren nach Anspruch 4 oder 7, dadurch gekennzeichnet, daß die Prüfkopfhalterung (6) bei Vorhandensein von engen Axialspalten (8) zwischen den Radkränzen einander benachbarter Radscheiben (2) an dem Manipulatorarm (7) zunächst in eine Stellung kleinster radscheibenaxialer Erstreckung gedreht, durch den Spalt eingeschleust und dann in Aufsetzposition gedreht wird (Fig. 15).

9. Verfahren nach einem der Ansprüche 1 bis 8, für Radscheiben, die im Grenzbereich Radnabe (2) Welle (1) mit Mitteln (3b) zur axialen Verdrehsicherung, insbesondere axialen Verdrehsicherungsbohrungen (3b1), versehen sind, in welche axiale Verdrehsicherungs-Bolzen einfügbar sind, dadurch gekennzeichnet, daß im Rahmen der Winkelspiegel-Methode die US-Strahlenbündel (a3) gegen die halbzylinderförmigen Grenzflächen der Verdrehsicherungsbohrungen (3b1) und jeweils eine angrenzende Nische (N2) des Nabeninnenumfanges (3a) unter solch einem Auftreffwinkel (γ) der Totalreflexion eingeschallt werden, daß sich bei fehlerfreier Verdrehsicherungsbohrung (3b1) zwei US-Anzeigen (R31, R32) ergeben, wovon die eine US-Anzeige (R31) von einem ersten, am Bohrungsumfang unter einem Auftreffwinkel von 90° in sich selbst reflektierten Teilstrahlenbündel (a31) und die andere US-Anzeige (R 32) von einem zweiten im Nischenbereich (N2) totalreflektierten Teilstrahlenbündel (a32) stammt, und sich bei fehlerbehafteter Verdrehsicherungsbohrung (3bl) eine weitere bzw. dritte US-Anzeige (FE2) ergibt, welche von einem dritten, an den Nabeninnen-

oberflächen und den Fehlergrenzflächen totalreflektierten dritten Teilstrahlenbündel (a33) stammt.

10. Verfahren nach Anspruch 9, gekennzeichnet durch einen solchen Einschallwinkel (α) und und Schielwinkel (δ) des US-Strahlenbündels, daß der Auftreffwinkel (γ) am Fehlerort angenähert 45°, bezogen auf das Lot (lo2), das auf den Nabeninnenumfang (3a) im Auftreffbereich der Nische (N2) gefällt wird, beträgt.

11. Einrichtung zur Durchführung des Verfahrens nach einem der Ansprüche 1 bis 10, dadurch gekennzeichnet, daß ein Manipulator (10) mit wenigstens einem Manipulatorarm (7.0) vorgesehen ist, dessen aus- und einfahrbarer Armteil (7) zumindest in der axialen Richtung (x), in der achsqueren Richtung (y), d. h. insbesondere in der radialen Richtung (r), und in Höhenrichtung (z) verstellbar und justierbar ist, daß am freien Ende des Manipulatorarmes (7) verschiedene Prüfkopfhalterungen (6) mit ihren Schablonenblechen (6a) auswechselbar zu befestigen sind und daß die Schablonenbleche (6a) mit darauf befestigten Spezial-Winkelprüfköpfen (PK) und Meßtastern (5) an die Seitenwangenkontur (2b1, 2b2) des betreffenden Teilbereiches (Aᵢ) der Prüfbereiche (A1, B, B1, B2, A2) angepaßt sind.

12. Einrichtung nach Anspruch 11, dadurch gekennzeichnet, daß der aus- und einfahrbare Arm (7) des Manipulators (10) auch in Umfangsrichtung (u) um die Achse (m) der Radscheibe (2) herum zumindest um einen Teil des Umfanges verstellbar ist.

13. Einrichtung nach Anspruch 11 oder 12, dadurch gekennzeichnet, daß wenigstens zwei Meßtaster (5), einer für die radiale, der andere für die axiale Positionskontrolle, an der Prüfkopfhalterung (6) befestigt sind.

14. Einrichtung nach Anspruch 13, gekennzeichnet durch mindestens einenweiteren Meßtaster, der zur Gewinnung eines Kontrollsignals dient.

15. Einrichtung nach Anspruch 11, 13 oder 14, gekennzeichnet durch induktive Meßtaster mit axial federbelasteten Taststiften (5.1) deren dem Tastkopf (5.2) abgewandte Enden jeweils einen zur wegabhängigen Verstimmung einer Induktionsspulenordnung dienenden Magnetkern tragen.

16. Einrichtung nach Anspruch 11, gekennzeichnet durch pneumatisch gefedertangeordnete Spezial Winkelprüfköpfe.

## Revendications

1. Procédé pour réaliser le contrôle par ultrasons de corps en forme de disques emmanchés à chaud sur des arbres, dans la zone d'ajustement forcée et dans les zones adjacentes d'influence du frettage, notamment dans la zone des surfaces intérieures du moyeu et des dispositifs axiaux de blocage en rotation dans le cas de disques de rotors de turbines à basse pression, les disques possédant des faces latérales, dont la section transversale se rétrécit, lorsqu'on regarde à partir de leurs moyeux, dans une direction radiale de l'intérieur vers l'extérieur, approximativement avec une forme de lobe jusqu'à une couronne du rotor, caractérisé par le fait

qu'aux faces latérales (2b1, 2b2), on accouple des têtes de contrôle par ultrasons (PK; PK1, PK2) destinées à parcourir des pistes de contrôle (u), qui s'étendent dans la direction circonférentielle, et opérant selon le principe de la réflexion d'ondes transversales sur arête dans la gamme des angles d'incidence de la réflexion totale, à savoir ce qu'on appelle le procédé de la réflexion spéculaire, et dont les faisceaux de rayonnement ultrasonore (a, b) sont dirigés sur les zones de contrôle des surfaces intérieures (3a) du moyeu,

que dans le cas de la présence de dispositifs axiaux de blocage en rotation (3b), sur le pourtour intérieur (3a) du moyeu, dans la zone extérieure axiale (A2b) de ce pourtour, on utilise, pour déterminer des défauts à orientation axiale-radiale (C2) la méthode de la réflexion spéculaire indiquée précédemment et/ou la méthode de l'incidence rasante, selon laquelle on envoie des ultrasons avec une incidence rasante sur les surfaces limites de dispositifs axiaux de blocage en rotation, notamment de perçages axiaux de blocage en rotation (3b1) de manière que, dans le cas de l'absence de défauts, on obtient uniquement un écho de perçage (BE, R 41) sur la base d'un angle d'incidence de 90°, tandis que dans le cas d'un défaut on obtient en outre un second écho de défaut (FE, 3) dont l'amplitude est nettement plus élevée, l'angle d'incidence (γ) sur les surfaces limites du défaut étant également ≈ 90°;

qu'on subdivise la surface intérieure du moyeu en au moins trois zones axiales de contrôle: une zone centrale de contrôle (B) et les deux zones extérieures contiguës de contrôle (A1, A2);

que l'on contrôle les surfaces extérieures de contrôle (A1, A2) selon le principe de la technique des échos d'impulsions avec des têtes de contrôle coudées à ultrasons, et que l'on contrôle la zone centrale de contrôle (B) selon le principe de la technique tandem à l'aide d'au moins deux têtes de contrôle coudées à ultrasons (PK2), parmi lesquelles une tête de contrôle d'émission (de réception) (PK2s) est disposée sur une face latérale (2b1) et l'autre tête de contrôle de réception (d'émission) (PK22e) est disposée sur l'autre face latérale (2b2) du disque (2) du rotor.

2. Procédé suivant la revendication 1, caractérisé par le fait qu'on subdivise la zone centrale de contrôle (B) en au moins deux zones partielles (B1), (B2), qui se chevauchent réciproquement et sur l'une (B2) ou (B1) desquelles on envoie des ultrasons à l'aide de têtes de contrôle d'émission (PK2s), qui sont placées sur la paroi latérale (2b1) ou (2b2) 5 située à l'opposé de la zone partielle, et le faisceau acoustique (b) est réfléchi, dans le cas de la présence d'un défaut, en direction des têtes de contrôle de réception (PK22e), qui sont placées sur la paroi latérale (2b2) ou (2b1), située du côté de la zone partielle (B2) ou (B1), et inversement.

3. Procédé suivant l'une des revendications 1 ou 2, caractérisé par le fait qu'on subdivise également les zones extérieures de contrôle (A1, A2) en plusieurs zones partielles axiales (A11, A12, A13, ..., etc; A21, A22, A23... etc, d'une manière générale $A_i$) et que l'on contrôle chacune des zones partielles axiales ($A_i$) à l'aide d'au moins une tête de contrôle angulaire par ultrasons (PK1, PK11, PK12, etc).

4. Procédé suivant la revendication 2 ou 3, caractérisé par le fait qu'en fonction de la position respective d'émission et/ou de réception, déterminée par des coordonnées axiales et radiales (x; r), des têtes de contrôle sur le contour des faces latérales, on utilise des têtes spéciales de contrôle angulaire (PK) avec des angles adaptés (α) d'émission des ultrasons et des angles bigles adaptés (δ), qu'on dispose les têtes spéciales de contrôle angulaire ainsi que les palpeurs de mesure (5) sur un support (6) des têtes de contrôle, qui est adapté à la section respective de la face latérale et qui comporte une tôle formant gabarit (6a), et qu'on rapproche du contour de la section de la face latérale devant être accouplée les têtes de contrôle ainsi que ce support (6) portant les têtes, sur l'extrémité libre déployable (7a) d'un bras (7) d'un manipulateur, chacune des tôles formant gabarits (6a) étant associée à une zone partielle déterminée ($A_i$) des zones de contrôle (A1, B, B1, B2, A2) et son positionnement correct du point de vue axial et radial étant affiché au moyen du palpeur de mesure (5).

5. Procédé selon la revendication 4, caractérisé par le fait que l'on contrôle au moins une partie des zones extérieures de contrôle (A1, A2) à l'aide de têtes particulières de contrôle angulaire (PK), qui sont fixées au moins par couples sur les supports correspondants (6a) des têtes de contrôle et qui sont positionnées, au moyen de ces supports, contre la partie associée de la paroi latérale du disque du rotor (2).

6. Procédé selon l'une des revendications 1 à 5, caractérisé par le fait que comme critère pour le passage d'une zone extérieure de contrôle (A1, A2) à une zone centrale de contrôle (B) et par conséquent de la technique à échos d'impulsions à la technique tandem et inversement, l'angle α d'émission des ultrasons au niveau de la position considérée est au maximum égal ou inférieur à 75° et de préférence ≤ 70°.

7. Procédé suivant l'une des revendications 1 à 6 caractérisé par le fait qu'on rapproche du contour (2b1, 2b2) des parois latérales du disque du rotor (2) les supports (6a) portant les têtes de contrôle (PK), dans une direction radiale et notamment radiale-horizontale (y, r).

8. Procédé suivant la revendication 4 ou 7, caractérisé par le fait que, dans le cas de la présence de fentes axiales étroites (8) entre les couronnes de disques du rotor voisins (2), on amène par rotation le support (6) portant les têtes de contrôle, sur le bras (7) du manipulateur, tout d'abord dans une position correspondant à l'extension la plus faible dans la direction de l'axe des disques du rotor, on l'insère à l'intérieur de la fente et on l'amène ensuite par rotation dans la position de mise en place (figure 15).

9. Procédé suivant l'une des revendications 1 à 8, pour des disques de rotor, qui comportent, dans la zone limite moyeu de rotor (2) — arbre (1), des moyens (3b1) servant à réaliser un blocage axial en rotation, notamment des perçages axiaux de blocage en rotation (3b1), dans lesquels on peut insérer des boulons axiaux de blocage en rotation, caractérisé par le fait que, dans le cas de la méthode de la réflexion spéculaire, on dirige les faisceaux de rayons ultrasonores (3a) vers les surfaces limites semi-cylindriques des perçages de blocage en rotation (3b1) et respectivement vers une niche contiguë (N2) de la périphérie intérieure (3a) du moyeu, sous un angle d'incidence (γ) de réflexion totale, tel que, dans le cas où un perçage de blocage en rotation (3b1) ne comporte aucun défaut, on obtient deux affichages ultrasonores (R31, R32), dont l'un (R31) est fourni par un premier faisceau de rayonnement partiel (a31) réfléchi sur lui-même sur le pourtour du perçage, sous un angle d'incidence de 90° et dont l'autre (R32) est produit par un faisceau de rayonnement partiel (a32) ayant subi une réflexion totale dans la zone (N2) de la niche, et que, dans le cas d'un perçage de blocage en rotation (3b2) comportant un défaut, on obtient un autre troisième affichage ultrasonore (FE2), qui est produit par un troisième faisceau de rayonnement partiel (a33), produit par réflexion totale sur les surfaces intérieures du moyeu et sur les surfaces limites du défaut.

10. Procédé suivant la revendication 9, caractérisé par un angle (α) d'émission et un angle bigle (δ) du faisceau de rayonnement ultrasonore, tels que l'angle d'incidence (γ) au niveau de l'emplacement du défaut est égal approximativement à 45° par rapport à la normale (lo2) au pourtour intérieur (3a) du moyeu dans la zone d'incidence dans la niche (N2).

11. Dispositif pour la mise en oeuvre du procédé suivant l'une des revendications 1 à 10, caractérisé par le fait qu'il est prévu un manipulateur (10) comportant au moins un bras (7.0), dont la partie (7), qui peut être déployée et rétractée, peut être réglée et ajustée au moins dans la direction axiale (x), dans la direction (y) transversale par rapport à l'axe, c'est-à-dire notamment dans la direction radiale (r), et dans la direction en hauteur (z), que l'on peut fixer, d'une manière interchangeable, différents supports (6) des têtes de contrôle et portant leurs tôles formant gabarits (6a), sur l'extrémité libre du bras (7) du manipulateur et que les tôles formant gabarit (6a), sur lesquelles sont fixées des têtes spéciales de contrôle coudées (PK) et des palpeurs de mesure (5), sont adaptées au contour (2b1, 2b2) des parois latérales de la zone partielle considérée ($A_i$) des zones de contrôle (A1, B, B1, B2, A2).

12. Dispositif suivant la revendication 11, caractérisé par le fait que le bras (7), qui peut être déployé et rétracté, du manipulateur (10) peut être également déplacé dans la direction circonférentielle (u) autour de l'axe (m) du disque du rotor (2), au moins sur une partie de la circonférence.

13. Dispositif suivant la revendication 11 ou 12, caractérisé par le fait qu'au moins deux palpeurs de mesure (5), dont l'un est prévu pour le contrôle radial de position et l'autre pour le contrôle axial de position, sont fixés sur le support (6) des têtes de contrôle.

14. Dispositif suivant la revendication 13, caractérisé par au moins un autre palpeur de mesure, qui est utilisé pour obtenir un signal de contrôle.

15. Dispositif suivant la revendication 11, 13 ou 14, caractérisé par des palpeurs inductifs de mesure comportant des tiges de palpage (5.1) chargées axialement par des ressorts et dont les extrémités, tournées vers la tête de palpage (5.2), portent respectivement un noyau magnétique utilisé pour désaccorder, en fonction de la distance, un dispositif de bobines d'induction.

16. Dispositif suivant la revendication 11, caractérisé par des têtes spéciales de contrôle coudées montées en suspension pneumatique.

**Claims**

1. A method for ultrasonic testing of disc bodies shrink-fitted on to shafts in the region of the shrink-fitted seats and the adjoining shrinkage influence zones, in particular in the region of the inner surfaces of the hubs and the axial anti-rotation devices in wheel discs of low pressure turbine rotors, the wheel discs having side walls that are tapered radially outwardly from the hub to the wheel disc rim in a generally lobar or club-like manner when viewed in cross-section, characterised in that

coupled to the side walls (2b1, 2b2) are ultrasonic probes (PK; PK1, PK2) for following scanning paths (u) that extend circumferentially, which operate according to the principle of transversal wave reflection within a corner within the range of the angles of incidence of total reflection (the so-called corner reflection method) and from which the ultrasonic beams (a, b) are directed towards the test regions of the inner surfaces (3a) of the hubs;

when axial anti-rotation devices (3b) are present on the inner periphery (3a) of the hub in its axial outer region (A2b) the above-mentioned corner reflection method and/or the grazing incidence method are/is used, wherein the boundary surfaces of the axial anti-rotation devices, particularly anti-rotation holes (3b1), are scanned in a grazing manner so that in the absence of defects only one hole echo (BE, R 41) results owing to a 90° angle of incidence, but in the presence of a defect a second defect echo (FE, 3) having a substantially larger amplitude also results where the angle of incidence (γ) at the surfaces bordering the defect is likewise ≈90°;

the inside surface of the hubs is divided into at least three axial test regions: a central test region (B) and two adjoining outer test regions (A1, A2);

the outer test regions (A1, A2) are tested with ultrasonic angle beam probes according to the pulse echo technique, and

the central test region (B) is tested according to the tandem technique using at least two ultrasonic angle beam probes (PK2) of which one transmitting (receiving) probe (PK2) is arranged on one of the side walls (2b1) and the other receiving (transmitting) probe (PK22e) is arranged on the other side wall (2b2) of the wheel disc (2).

2. A method according to claim 1, characterised in that the central test region (B) is divided into at least two overlapping subregions (B1), (B2) of which one subregion (B2) or (B1) is insonified with transmitting probes (PK2s) which are arranged on the respective side wall (2b1) or (2b2) remote from the subregion, and in the case of a defect the sound ray (b) is reflected to the receiving probes (PK22e) which are arranged on the respective side wall (2b2) or (2b1) adjoining the respective subregion (B2) or (B1), and vice versa.

3. A method according to claim 1 or claim 2, characterised in that the outer test regions (A1, A2) are also divided into several axial subregions (A11, A12, A13... etc.; A21, A22, A23... etc. generally $A_i$) and each of the axial subregions ($A_i$) is tested with at least one ultrasonic angle beam probe (PK1, PK11, PK12... etc.).

4. A method according to claim 2 or claim 3, characterised in that depending on the respective transmitting and/or receiving position of the probes on the contour of the side walls given by axial and radial coordinates (x; r) special angle beam probes (PK) having adapted incidence angles (α) and oblique angles (δ) are used, the special angle beam probes together with test feelers (5) are arranged on the probe mounting (6) adapted to the respective side wall section and having a template (6a) and with this probe mounting (6) at the free, advanceable end (7a) of a manipulator arm (7) are advanced to the contour of the side wall section to be coupled thereto, each template (6a) being associated with a specific subregion ($A_i$) of the test regions (A1, B, B1, B2, A2) and its axial and radial correct positioning being indicated by the test feeler (5).

5. A method according to claim 4, characterised in that at least one part of the outer test region (A1, A2) is tested with special angle beam probes (PK) which are mounted at least in pairs on to the corresponding probe mountings (6a) and are positioned therewith on the associated side wall part of the wheel disc (2).

6. A method according to any one of claims 1 to 5, characterised in that the criterion used for the transition from an outer (A1, A2) to a central test region (B) and thereby from the pulse echo technique to the tandem technique and vice versa, is that the incidence angle α at the respective position is at the most equal to or is smaller than 75°, preferably ≤ 70°.

7. A method according to any one of claims 1 to 6, characterised in that the probe mountings (6a) are advanced with their probes (PK) in the radial, in particular radial horizontal, direction (y, r) of the wheel disc (2) to its side wall contour (2b1, 2b2).

8. A method according to claim 4 or claim 7, characterised in that when there are narrow axial gaps (8) between the wheel rims of adjacent wheel discs (2) the probe mounting (6) is first rotated at the manipulator arm (7) into a position of the smallest axial reach of the wheel discs, transferred through the gap and then rotated into the mounting position (Fig. 15).

9. A method according to any one of claims 1 to 8 for wheel discs which, between the boundary surface of wheel hub (2) shaft (1), are provided with means (3b) for preventing axial rotation, in particular axial rotation preventing holes (3b1) in which axial rotation preventing bolts can be inserted, characterised in that with the corner reflection method the ultrasonic beams (a3) are irradiated towards the semi-cylindrical boundary surfaces of the rotation preventing holes (3b1) and a respective adjoining recess (N2) in the inner periphery of the hub (3a) at such an incidence angle (γ) of the total reflection that two ultrasonic indications (R31, R32) result in the case of a rotation preventing hole (3b1) without a defect, of which one ultrasonic indication (R31) originates from a first sub-beam (a31) reflected back upon itself at the periphery of the hole at an angle of incidence of 90°, and the other ultrasonic indication (R 32) originates from a second sub-beam (a32) totally reflected in the recess region (N2), and in the case of a defective rotation preventing hole (3b1) a further or third ultrasonic indication (FE2) results which originates from a third sub-beam (a33) totally reflected at the inner surfaces of the hub and at boundary surfaces of a defect.

10. A method according to claim 9, characterised by an incidence angle (α) and oblique angle (δ) of the ultrasonic sound beam wherein the incidence angle (γ) at the defect area amounts to approximately 45° in relation to the perpendicular line (lo2) drawn on the inner periphery (3a) of the hub in the region of incidence of the recess (N2).

11. Apparatus for carrying out the method according to any one of claims 1 to 10, characterised in that a manipulator (10) with at least one manipulator arm (7.0) is provided, the arm part (7) of which can be advanced and withdrawn, being displaceable and adjustable at least in the axial direction (x), in the transverse axial direction (y), i.e. in particular in the radial direction (r), and in height (z); that different probe mountings (6) can be fastened to the free end of the manipulator arm (7) so that their templates (6a) can be exchanged and that the templates (6a) with special angle beam probes (PK) and test feelers (5a) mounted thereon are adapted to the side wall contour (2b1, 2b2) of the respective subregion (A<sub>i</sub>) of the test region (A1, B, B1, B2, A2).

12. Apparatus according to claim 11, characterised in that the arm (7) of the manipulator (10) that can be advanced and withdrawn can also be adjusted in the peripheral direction (u) about the axis (m) of the wheel disc (2) at least over part of the periphery.

13. Apparatus according to claim 11 or claim 12, characterised in that at least two test feelers (5) are mounted on the probe mounting (6), one for controlling the radial position and the other the axial position.

14. Apparatus according to claim 13, characterised by at least one further test feeler which serves to obtain a control signal.

15. Apparatus according to claim 11, 13 or 14, characterised by inductive test feelers with axially spring-loaded feeler pins (5.1) of which the ends remote from the test feeler (5.2) each carry a magnetic core for the distance-dependent detuning of an induction coil arrangement.

16. Apparatus according to claim 11, characterised by pneumatically resilient special angle beam probes.

**EP 0 126 383 B1**

FIG 1

FIG 2

FIG 3

FIG 4

FIG 5

FIG 6

FIG 7

FIG 8

FIG 9 A

FIG 9 B

FIG 10 A

FIG 10 B

FIG 11 A

FIG 11 B

FIG 12

FIG 13

FIG 14

9

FIG 15